# EUROPEAN PATENT SPECIFICATION

(11) **EP 3 707 073 B1**
(45) Date of publication and mention of the grant of the patent: **17.07.2024**
(21) Application number: 18826116.8
(22) Date of filing: 05.11.2018
(51) Int. Cl.: B64C 29/00, B64C 11/00, B64C 39/02, B64C 27/20

(54) **FLYING VEHICLE'S DRIVE UNIT**
ANTRIEBSEINHEIT EINES FLIEGENDEN FAHRZEUGS
UNITÉ MOTRICE D'UN VÉHICULE VOLANT

(30) Priority: 12.11.2017 PL 42341817
(43) Date of publication of application: 16.09.2020
(73) Proprietor: PERAVIA SPÓLKA Z OGRANICZONA ODPOWIEDZIALNOSCIA, 42-200 Czestochowa (PL)
(72) Inventor: BRYZIK, Grzegorz, 42-200 Czestochowa (PL)
(74) Representative: Korbela, Anna
(86) International application number: PCT/PL2018/000106
(87) International publication number: WO 2019/093913

(56) References cited:
- DE-U1- 29 916 203
- GB-A- 2 365 392
- GB-A- 955 013
- US-A- 5 666 803
- US-A1- 2004 129 833
- US-A1- 2018 093 766

## Description

The subject of this invention is a drive unit for a flying vehicle, to be applied in the air industry, for instance in the production of flying taxis, as well as in the model-making branch and in the toy industry.

The solutions combining commonly known drive systems of aircrafts and helicopters or system which use propellers or turbines producing a vertical draft for vertical take-off and landing and then they change the direction of the draft into horizontal, by rotary change of position, are known. The solutions of vertical take-off aircrafts, which change completely the position from vertical into horizontal, are known.

The solution of an air vehicle drive device including the fan placed in a tubular air channel and guides for distributing the air jet into two or more additional jets directed to the appropriate jet nozzles is known from the publication of international application WO2003GB02770. The device provides vertical start and lifting force as well as the force for horizontal flight.

A drive unit, fitted with a turbine with a distributor, placed in the air channel, longitudinally with the outlet chute of the ramjet engine, is known from the publication of American invention disclosure US 20080150083. The distributor divides uniformly the flow of exhaust gas from the ramjet engine to two pairs of outlet nozzles, the outlet part of which is bent at an angle of 120° from the vertical, longitudinal axis of the nozzle.

A drive of vertical take-off and landing air vehicle, fitted with an engine, which contains at least two pairs of air channels, located symmetrically on the right and left sides in relation to the aircraft axis, in known from the Polish patent description PL221132. A turbine and a throttling valve, which serves for regulating the force of draft produced by the turbine and is located between the air inlet to the air channel and the turbine, are placed in each air channel. Each air channel includes a movable outlet nozzle at the outlet.

DE29916203U1 discloses an aircraft comprising a drive unit with two propellers and lateral apertures which aperture can be controlled (see Fig. 4-10) in order to control the force provided by the drive unit. US2004129833A1 discloses a VTOL micro-aircraft, i.e. with Vertical Take-Off and Landing, having a configuration able to allow it to have a very high flexibility of use in a multiplicity of fields of application without a pilot aboard. Notably, the micro-aircraft comprises two ducted propellers and directional flaps to assure complete control in flight.

The purpose of this invention is to design such a construction of drive which allows building the vertical take-off and landing air vehicles without equipping them with additional, rotary drive elements or without equipping them in two drive systems, separately for vertical and horizontal flight.

According to the invention, the essence of the air vehicle drive unit, which has at least one air channel being fitted with outlet-inlet nozzles openings and the drive unit in the form of at least two fans and at least two corresponding engines, wherein the fans of the drive unit are fixed on both ends of the air channel and that each fan of the drive unit is connected to the corresponding engine for individual regulation of the draft force by each of them. One of the outlet-inlet nozzles openings is placed in a wall of the central part of the air channel, between fixed fans of the drive unit, and constitutes a vertical draft force outlet-inlet nozzle opening and the opening of the vertical draft force outlet-inlet nozzle opening has a contour of rectangle with rounded corners, elongated in the direction of longitudinal axis of the air channel.

The solution according to the invention is characterized in a simple construction, which allows controlling the vehicle freely, by an independent regulation of rate and direction of the air jet produced by individual fans. The vehicle can ascend, descend, rotate, fly forward and backward.

The drive unit allows application, in its various combinations and arrangements, in flying vehicles.

The subject of the invention is presented in the embodiment, in figure, where Fig. 1 presents schematically the flying vehicle drive unit in longitudinal section from the side, Fig. 2 presents the unit in the longitudinal section from above, Fig. 3 presents the resultant draft force F of the drive unit, with equal draft forces F₁ and F₂, generated in one direction, Fig. 4 presents resultant draft force **F'** of the drive unit, with different draft forces F₁ and F₂, generated in one direction, Fig. **5** presents resultant draft force **F"** of the drive unit with equal draft forces F₁, and F₂, generated oppositely to each other, and Fig. **6** presents schematically the example of a flying vehicle with the drive unit according to the invention.

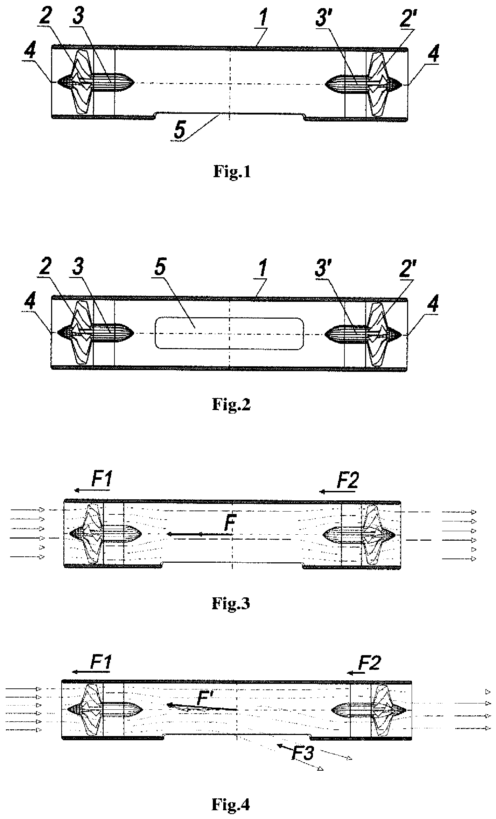

The flying vehicle drive unit, according to the present invention, presented in Fig.1 and Fig.2, is formed by the air channel 1, in the form of a straight segment of a tube with circular section, which has the fans 2, 2' with engines 3, 3' fixed on its both ends. The horizontal draft force outlet-inlet nozzle openings 4 are located on the both ends of the air channel 1, while the vertical draft force outlet-inlet nozzle opening 5 is placed between the fixed fans 2, 2' of the drive unit and situated longitudinally in the wall of the central part of the air channel 1.

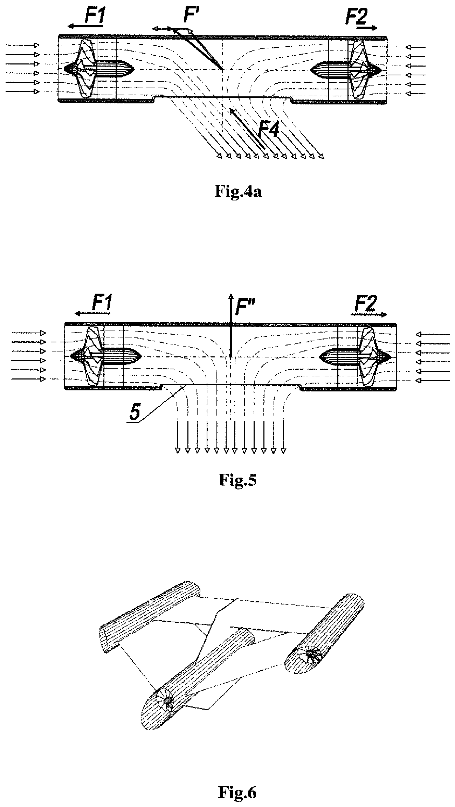

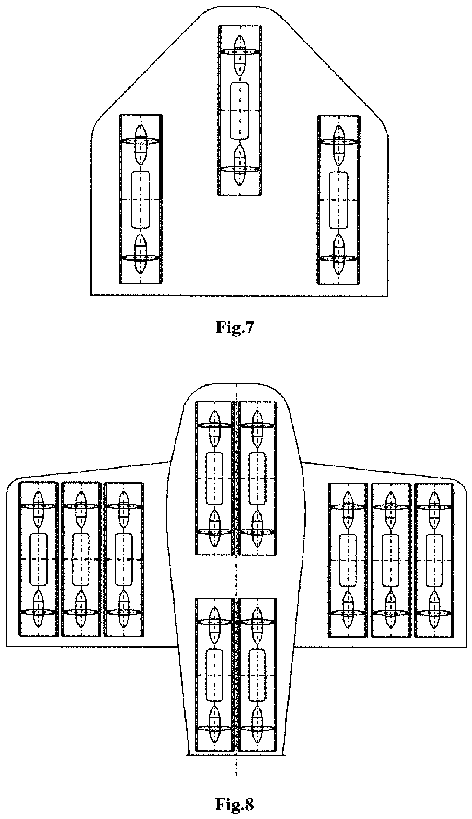

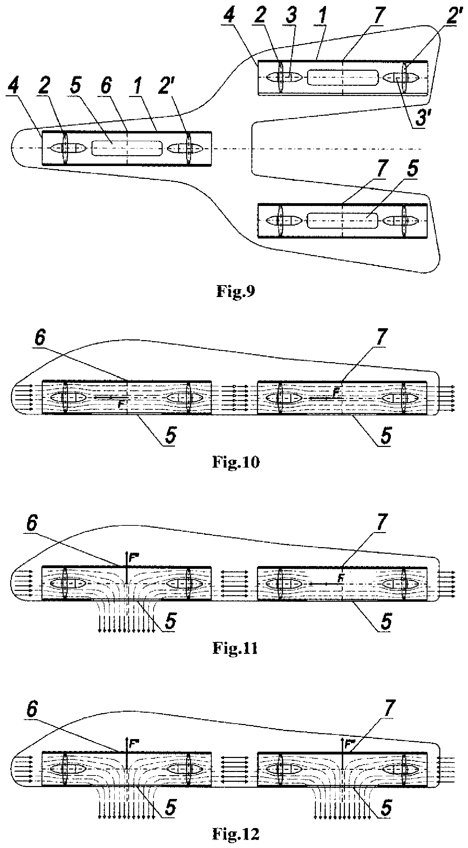

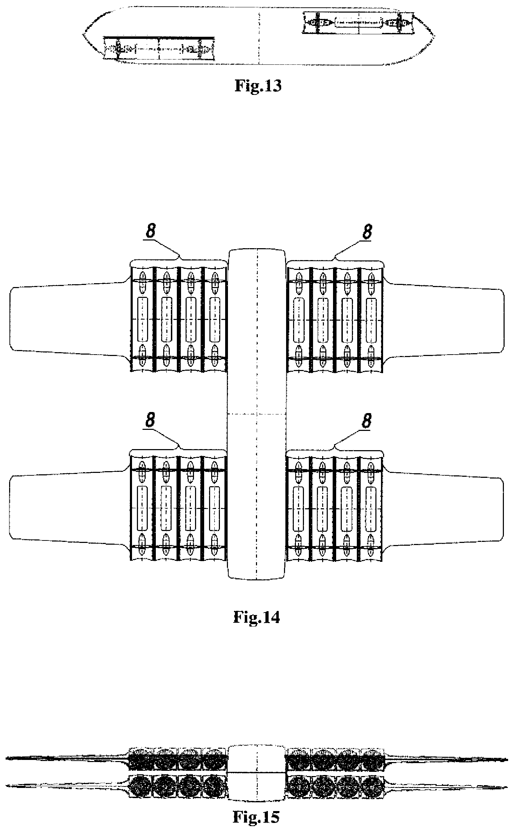

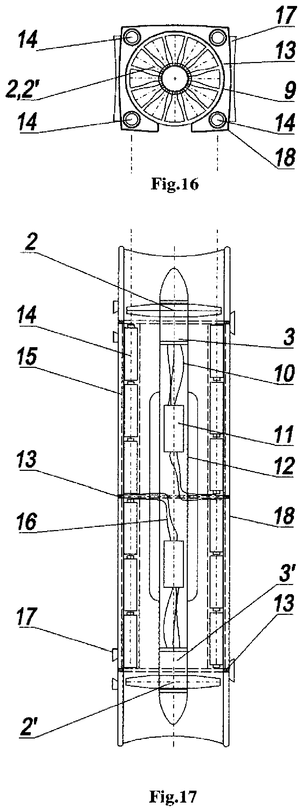

A flying vehicle with the drive unit in delta configuration, where there are three separate air channels 1 with the drives, in the form of a fan 2, 2' with engine 3, 3', fixed on the both ends of the air channels 1, is presented in Fig. 6.

Depending on directions and force of drafts generated by the fans 2, 2', installed in the drive unit, the air channel 1, fitted with three openings (i.e. two horizontal draft force outlet-inlet nozzles openings 4 and the vertical draft force outlet-inlet nozzle opening 5), generates a resultant draft in any direction in a vertical plane passing through the axis of the drive unit. Owing to this, the vehicle can achieve a stable direction of flight in any direction, i.e. vertical ascending and descending and horizontal forward and backward. By the application of several air channels, it is possible to achieve an additional rotary movement of the entire vehicle.

## Claims

1. drive unit suitable for an air vehicle and including at least one air channel (1) having two opposing ends, the air channel (1) being fitted with three outlet-inlet nozzles openings, of which one each is formed at a corresponding one of each of the two opposing ends of the air channel (1) and the drive unit including at least two engines (3, 3') each connected with at least one corresponding fan (2, 2') fixed in the air channel (1), wherein the fans (2, 2') of the drive unit are fastened on both ends of the air channel (1), and wherein each fan (2, 2') of the drive unit is connected with the corresponding engine (3, 3') for individual regulation of the corresponding draft force and wherein the third outlet-inlet nozzle opening is located in a wall of the central part of the air channel (1) between the fixed fans (2, 2') of the drive unit and constitutes a vertical draft force outlet-inlet nozzle opening (5) and the vertical draft force outlet-inlet nozzle opening (5) has a contour of rectangle with rounded corners, **characterised in that** the vertical draft force outlet-inlet nozzle opening (5) is elongated in the direction of longitudinal axis of the air channel (1) such that an independent regulation of the individual fixed fans allows the drive unit to produce a resultant draft force in the forward and backward longitudinal direction and in the ascending and descending vertical direction.

## Patentansprüche

1. Eine Antriebseinheit, die für ein Luftfahrzeug geeignet ist und mindestens einem Luftkanal (1) mit zwei gegenüberliegenden Enden aufweist, der Luftkanal (1) ist mit drei Auslass- und Einlassdüsenöffnungen ausgestattet, von denen jeweils eine an den zwei gegenüberliegenden Enden des Luftkanals (1) gebildet wird, und die Antriebseinheit umfasst mindestens zwei Motoren (3, 3'), die jeweils mit mindestens einem entsprechenden, im Luftkanal (1) befestigten Impeller (2, 2') verbunden sind, wobei
die Impeller (2, 2') der Antriebseinheit an beiden Enden des Luftkanals (1) angebracht sind und jeder Impeller (2,2') der Antriebseinheit mit dem entsprechenden Motor (3,3') zur individuellen Steuerung der entsprechenden Schubkraft verbunden ist
und die dritte Auslass- und Einlassdüsenöffnung in der Wand, die sich in der Mitte des Luftkanals (1) zwischen den angebrachten Impeller (2, 2') der Antriebseinheit befindet, und die Auslass- und Einlassdüsenöffnung des vertikalen Schubs (5) bildet,
und die Auslass- und Einlassdüsenöffnung des vertikalen Schubs (5) ist in Form eines Rechtecks mit abgerundeten Ecken ausgeführt,
**dadurch gekennzeichnet, dass** die Auslass- und Einlassdüsenöffnung des vertikalen Schubs (5) durch ihre gestreckte Form in der Richtung der Längsachse des Luftkanals (1) und durch eine unabhängige Regelung der einzelnen befestigten Impeller der Antriebseinheit eine resultierende Schubkraft erzeugen, die in vorwärts und rückwärts gerichtete Längsrichtung und in auf- und absteigenden vertikale Richtung wirken kann.

## Revendications

1. Unité motrice d'un véhiculé volant et comprenant au moins une conduite d'air (1) laquelle présente deux extrémités opposées, la conduite d'air (1) étant pourvue de trois ouvertures de tuyères d'admission et de sortie, dont deux sont chacune situées à une extrémité correspondante de chacune des deux extrémités opposées de la conduite d'air (1), et l'unité motrice comprenant au moins deux moteurs (3, 3'), chaque moteur étant relié au moins à un ventilateur respectif (2, 2') fixé à l'intérieur de la conduite d'air (1), de manière que
les ventilateurs (2, 2') de l'unité motrice sont fixés aux deux extrémités de la conduite d'air (1), et que chaque ventilateur (2, 2') de l'unité motrice est relié au moteur (3, 3') correspondant pour le réglage individuel de la force de poussée respective
et de manière qu'une troisième ouverture de tuyère d'admission et de sortie est située dans la paroi dans la partie centrale de la conduite d'air (1), entre les ventilateurs fixes (2, 2') de l'unité motrice, et constitue l'ouverture de tuyère d'admission et de sortie de poussée verticale (5),
et que l'ouverture de la tuyère d'admission et de sortie de poussée verticale (5) présente la forme d'un rectangle aux angles arrondis,
**caractérisé en ce que l**'ouverture de la tuyère d'admission et de sortie de poussée verticale (5) est disposée de manière longitudinale selon l'axe longitudinal de la conduite d'air (1),
de sorte que le réglage indépendant des ventilateurs fixés individuellement permet à l'unité motrice de produire une poussée résultante dans le sens longitudinal avant et arrière et dans le sens vertical vers le haut et vers le bas.
